# EUROPEAN PATENT APPLICATION

(11) **EP 1 921 493 A2**
(43) Date of publication of application: **14.05.2008**
(21) Application number: 07021504.1
(22) Date of filing: 05.11.2007
(51) Int. Cl.: G02F 1/13357, F21V 19/00, H01R 33/08

(54) **Liquid crystal display apparatus**

(30) Priority: 07.11.2006 JP 2006301830
(71) Applicant: Funai Electric Co., Ltd., Daito-shi Osaka 574-0013 (JP)
(72) Inventor: Sakuma, Kota, Daito-shi Osaka 574-0013 (JP)
(74) Representative: Erny, Tobias

(57) **Abstract**

In a liquid crystal display apparatus, in the bottom surface portion of a rear frame (1), rectangular through holes (14) are formed. An electric wire mounting portion (311) of a lamp socket (31) is inserted into a through hole formed in the bottom surface portion of the rear frame, so that a part of the electric wire mounting portion protrudes outward from the through hole.

## Description

### BACKGROUND OF THE INVENTION

### 1. Field of the Invention

The present invention relates to a liquid crystal display apparatus. More particularly, it relates to a mounting structure of a backlight for preventing the breakage of a wire for supplying an electric power to the backlight serving as a light source disposed on the rear surface.

### 2. Description of Related Art

A liquid crystal display apparatus is of a thin type, is lightweight, and is low in power consumption, and is widely used for a notebook PC, a monitor for PC, a household TV set, or the like. The liquid crystal display apparatus transmits a light emitted from a backlight through a liquid crystal cell to form a picture. The liquid crystal display apparatus includes optical members such as a reflection sheet for reflecting a light emitted from the backlight, a diffusion plate for diffusing a light emitted from the backlight and a light reflected by the reflection sheet, and a diffusion sheet disposed in stacked relation with the diffusion plate, and for enhancing the diffusion effect of light.

In the liquid crystal display apparatus, the reflection sheet is attached to a rear frame by an adhesion sheet. In the liquid crystal display apparatus, after attaching the reflection sheet to the rear panel, a backlight is mounted. In the liquid crystal display apparatus, to the rear frame, the reflection sheet and the backlight are disposed, and then, a light frame for fixing the backlight is disposed. The diffusion plate and the diffusion sheet are mounted and fixed in the following configuration. The diffusion sheet is stacked on the diffusion plate, and the lamination is mounted on the light frame. In such a state, the lamination is pressed by a guide member from the top.

In order to inhibit the liquid crystal display apparatus from undergoing deformation such as twist or bending, the rear frame must be allowed to have sufficient strength. Under such circumstances, in a large liquid crystal display apparatus which particularly tends to be deformed, a rear frame made of a metal is often utilized in order to ensure a sufficient strength. For the rear frame, the one formed by cutting and bending a sheet metal by pressing is widely used in order to shorten the manufacturing step and to suppress the manufacturing cost.

The backlight has a cathode-ray tube, and it is allowed to produce light by supplying an electric power to the cathode-ray tube. The cathode-ray tube includes a lamp holder. To the lamp holder, an electric wire for supplying an electric power is mounted. The electric wire is connected to an electric power source apparatus provided in the outside of a rear frame. The rear frame is, as described above, fabricated by cutting and bending a sheet metal, and the cut edge is formed in a sharp pointed portion, in a so-called sharp edge.

When the electric wire is rubbed with the sharp edge, the sheath of the electric wire is cut, so that the electric wire is exposed. As a result, unfavorably, a short is caused, or the electric wire is cut. When the sheath of the electric wire is damaged, and the electricity flowing in the electric wire leaks, a malfunction is caused, or heat generation or ignition is caused. Whereas, when a user touches the electric wire, he or she may receive an electric shock. Accordingly, it becomes impossible to ensure the safe use.

Under such circumstances, the following technique is proposed. Namely, to the portion of the electric wire which comes in contact with, or may come in contact with the sharp edge, a protective member is mounted (e.g., JP-A-2003-68125). By mounting the protective member, even when the sharp edge and the protective member are rubbed each other, the sheath of the electric wire can be prevented from being cut, though the protective member is cut.

However, with the technique of mounting the protective member in order to prevent the electric wire from being damaged, or broken due to rubbing with the sharp edge, the protective member must be separately prepared. This results in an increase in number of components, leading to an increase in manufacturing cost of the liquid crystal display apparatus.

Further, when the protective member continues to be cut by the sharp edge, the sharp edge may reach the sheath of the electric wire, and the sharp edge may damage the electric wire. In other words, mounting of the protective member can retard damage of the electric sheath by the sharp edge, but it is difficult to inhibit the damage.

### SUMMARY OF THE INVENTION

It is an object of the present invention to provide a liquid crystal display apparatus having a structure capable of inhibiting the problems such as damage and breakage of the electric wire by the sharp edge of a rear frame from occurring even without mounting a protective member to the electric wire of a backlight.

It is another object of the present invention to provide a liquid crystal display apparatus having a structure capable of, when a backlight is mounted on a rear panel, disposing a plurality of cathode-ray tubes forming the backlight at appropriate positions of the rear panel with ease.

A liquid crystal display apparatus in accordance with one embodiment of the present invention, includes: a rear frame having a rectangular bottom surface portion; and a backlight having a cathode-ray tube disposed above the rear frame, a lamp socket mounted to the edge of the cathode-ray tube, and enclosing the cathode-ray tube, and an electric wire mounted to the lamp socket, and for supplying an electric power to the cathode ray tube, wherein the bottom surface portion of the rear frame has a plurality of through holes formed therein, the lamp socket has an electric wire mounting portion jutting downward, and for mounting the electric wire thereto, and the lamp socket is mounted such that the electric wire mounting portion is inserted into the through hole, and such that at least the tip of the electric wire mounting portion protrudes outward from the bottom surface portion of the rear frame.

With this configuration, the sharp edge formed at the edge of the through hole formed in the bottom surface portion of the rear frame faces the electric wire mounting portion. This can prevent the electric wire from coming in contact with the sharp edge.

This can inhibit the following. The electric wire is broken, so that the cathode-ray tube is not turned on. As a result, the display performance of the liquid crystal display apparatus is reduced, or the sheath of the electric wire is damaged, resulting in leakage of electricity. This causes problems such as malfunction, breakage, heat generation, and ignition of the liquid crystal display apparatus.

Further, a protective member to be mounted to the electric wire in order to prevent the damage of the electric wire by the sharp edge is not required. Accordingly, a small number of components are enough, which can reduce the manufacturing cost.

In a preferred embodiment of the present invention, the lamp socket and the electric wire mounting portion are integrally formed.

In another preferred embodiment of the present invention, the cathode-ray tube has a folded portion formed in a U shape.

In a still other preferred embodiment of the present invention, the lamp socket holds both the edges of the cathode-ray tube simultaneously, and encloses the cathode-ray tube.

In a further preferred embodiment of the present invention, the though hole has such a shape as to allow the electric wire mounting portion of the lamp socket to penetrate therethrough.

A liquid crystal display apparatus in accordance with another embodiment, includes: a rear frame having a rectangular bottom surface portion; a reflection sheet mounted to the rear frame; a backlight having three cathode-ray tubes disposed above the reflection sheet, and having a U-folded shape, a lamp socket for holding both the edges of the cathode-ray tubes simultaneously, and enclosing the cathode-ray tubes, and an electric wire mounted to the lamp socket, and for supplying an electric power to the cathode-ray tubes; a light frame having a holding portion for holding the backlight on the underside; a diffusion plate disposed on the light frame; two diffusion sheets disposed in stacked relation on the diffusion plate; a frame-like cell guide disposed so as to press the outer peripheral portions of the diffusion plate and the diffusion sheets; a liquid crystal cell disposed above the cell guide;
and a bezel having an opening formed at the center, wherein the bottom surface portion of the rear frame has three rectangular through holes formed therein, the lamp socket includes an electric wire mounting portion for mounting the electric wire thereto integrally formed on the underside, and the lamp socket is mounted such that the electric wire mounting portion is inserted into the through hole, and such that the tip of the electric wire mounting portion protrudes outward from the bottom surface portion of the rear frame.

### BRIEF DESCRIPTION OF THE DRAWINGS

Fig. 1 is an exploded perspective view of one example of a liquid crystal display apparatus in accordance with the present invention;
Fig. 2 is a bottom view of the liquid crystal display apparatus shown in Fig. 1;
Fig. 3 is a cross sectional view of the liquid crystal display apparatus shown in Fig. 2 cut along cross section X-X; and
Fig. 4 is a cross sectional view of the liquid crystal display apparatus shown in Fig. 2 cut along cross section Y-Y.

### DESCRIPTION OF THE PREFERRED EMBODIMENTS

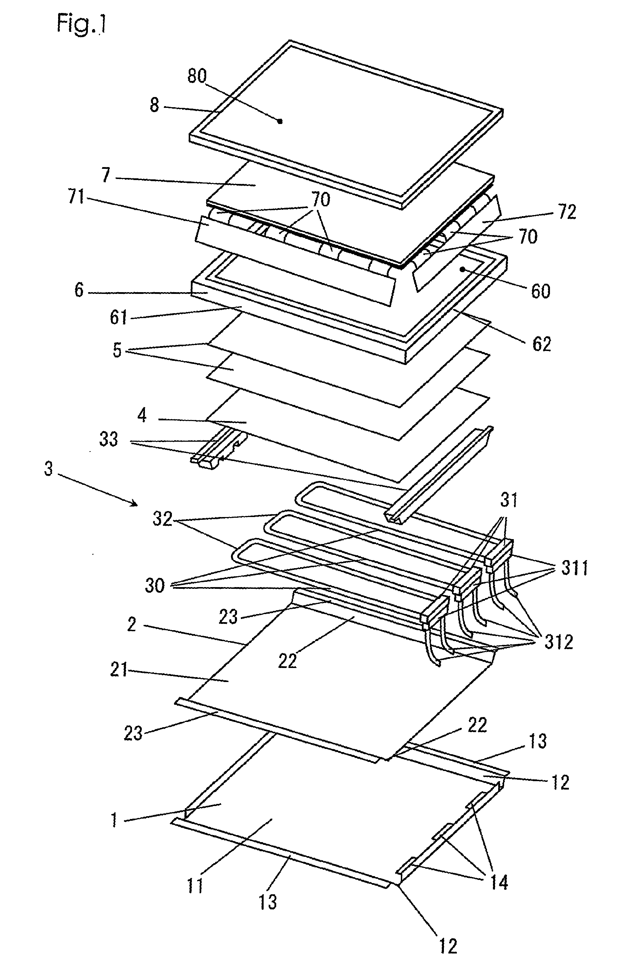

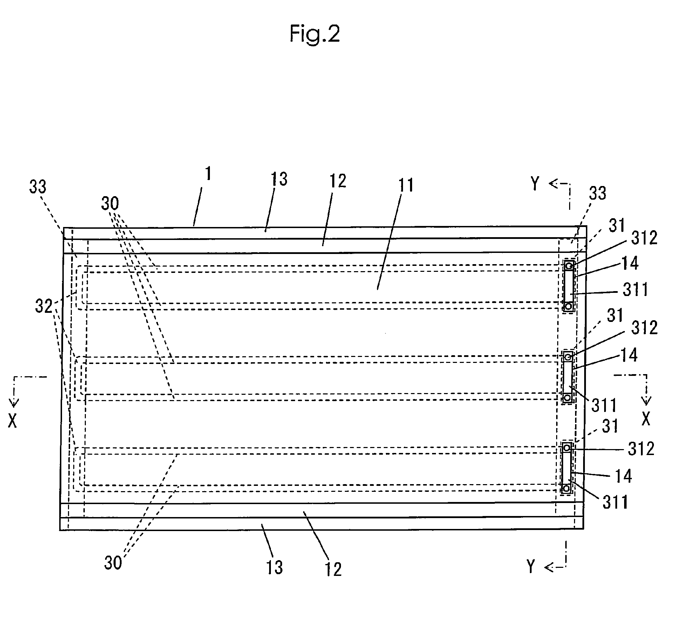

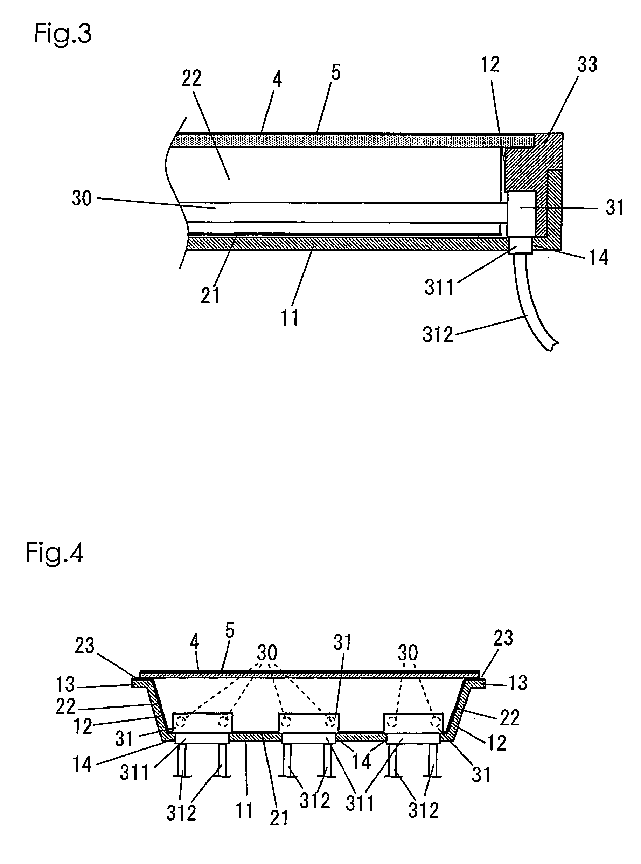

Below, the present invention will be described by way of embodiments by reference to the accompanying drawings. Fig. 1 is an exploded perspective view of one example of a liquid crystal display apparatus in accordance with the present invention; Fig. 2 is a bottom view of the liquid crystal display apparatus shown in Fig. 1; Fig. 3 is a cross sectional view of the liquid crystal display apparatus shown in Fig. 2 cut along cross section X-X; and Fig. 4 is a cross sectional view of the liquid crystal display apparatus shown in Fig. 2 cut along cross section Y-Y. Incidentally, in Figs. 2 to 4, a cell guide, a liquid crystal cell, and a bezel are not shown. The liquid crystal display apparatus shown in Fig. 1 includes a rear frame 1, a reflection sheet 2, a backlight 3, a diffusion plate 4, a diffusion sheet 5, a cell guide 6, a liquid crystal cell 7, and a bezel 8 stacked in this order.

The rear frame 1 is formed by cutting and bending a metal plate. The rear frame 1 has a bottom surface portion 11 in a rectangle form, rising portions 12 respectively rising obliquely outward from the edges of the long sides of the bottom surface portion 11, and support portions 13 formed integrally with the respective tips of the rising portions 12 so as to be in parallel with the bottom surface portion 11.

The reflection sheet 2 is mounted on the rear frame 1. The reflection sheet 2 has a main body portion 21 to be in close contact with the bottom surface portion 11, connection portions 22 each to be in close contact with the inner surface of each rising portion 12, and fitting portions 23 each to be in close contact with each support portion 13. The reflection sheet 2 is for reflecting a light ray to be emitted toward the rear frame 1 side out of the light rays emitted from the backlight 3 toward the liquid crystal cell 6 side.

The backlight 3 is a light source of the liquid crystal display apparatus. Although not limited thereto, herein, it has a U-shaped cathode-ray tube 30, and a lamp socket 31 for holding both the edges of the cathode-ray tube 30, and supplying electric power. The cathode-ray tube 30 has a folded portion 32 at which the cathode-ray tube 30 is folded in a U shape at the middle. The backlight 3 is pressed by a light frame 33 at the vicinity of the folded portion 32 and at the vicinity of the lamp socket 31, and is fixed to the rear frame 1. Although not limited thereto, herein, the backlight 3 has three cathode-ray tubes 30.

The diffusion plate 4 has a rectangular shape, and disposed in such a manner as to fit with the step portion formed in the light frame 33, and as to be in contact with the support portions 13 of the rear frame 1. The diffusion plate 4 diffuses a light emitted from the backlight 3, and a light reflected by the reflection sheet 2, and makes uniform the intensity of the light. The diffusion sheet 5 is disposed in stacked relation on the diffusion plate 4, and compensates the diffusing power of light of the diffusion plate 4. When the diffusion plate 4 capable of sufficiently enhancing the uniformity of light can be used, the diffusion sheet 5 may be omitted.

The cell guide 6 is mounted from above the diffusion plate 4 and the diffusion sheet 5 disposed on the rear frame 1 and the light frame 33. The cell guide 6 is formed of a resin, and it is a rectangular frame body formed by connecting long frame portions 61 and short frame portions 62. An opening 60 is formed at the center. The cell guide 6 is a frame body, and presses and fixes the outer periphery portions of the diffusion plate 4 and the diffusion sheet 5. On the top side of the cell guide 6, a step portion is formed. The liquid crystal cell 7 is fitted in the step portion, and aligned. The cell guide 6 is fixed to the rear frame 1 and the light frame 33.

A light diffused by the diffusion plate 4 and the diffusion sheet 5 is applied through the opening 60 at the center of the cell guide 6 to the liquid crystal cell 7. The liquid crystal cell 7 is configured such that a liquid crystal is sealed between glass substrates each with a transparent electrode disposed thereon. The liquid crystal cell 7 has a rectangular shape. To one long side thereof, a gate substrate 71 including a gate driver mounted thereon is mounted via a flexible substrate 70. Whereas, to one short side thereof, a source substrate 72 including a source driver mounted thereon is mounted via a flexible substrate 70. An electric power is supplied from the gate substrate 71 and the source substrate 72 to the transparent electrodes, so that the liquid crystal is driven to form a picture on the liquid crystal cell 7.

The bezel 8 has an opening 80 formed at the center. The bezel 8 is fixed to the rear frame 1 with the cell guide 6 by means of bolts not shown. Although not limited thereto, herein, it is formed by cutting and bending a metal plate. The bezel 8 and the cell guide 6 are connected and fixed, thereby to press the side edges of the liquid crystal cell 7 disposed on the cell guide 6.

As shown in Figs. 2 to 4, in the bottom surface portion 11 of the rear frame 1, rectangular through holes 14 are formed. The rectangular through holes 14 are formed at positions which are not covered with the reflection sheet 2 even when the reflection sheet 2 is mounted on the rear frame 1. The through holes 14 are formed by perforating the bottom surface portion 11 of the rear frame 1 which is a metal sheet with a method such as pressing. The hole edge is formed in a sharp pointed shape, in a so-called sharp edge.

As shown in Figs. 3 and 4, on the lamp socket 31, an electric wire mounting portion 311 protruding on the bottom surface portion 11 side of the rear frame 1 is formed. To the electric wire mounting portion 311, an electric wire 312 for supplying an electric power to the cathode-ray tube 30 is mounted. To the opening of the cathode-ray tube 30, the lamp socket 31 is mounted. The electric wire mounting portion 311 of the lamp socket 31 is inserted into the through hole 14 formed in the bottom surface portion 11 of the rear frame 1. Thus, the cathode-ray tube 30 is mounted on the rear frame 1.

The electric wire mounting portion 311 is mounted so that a part thereof protrudes from the through hole 14. The sharp edge at the hole edge of the through hole 14 faces the electric wire mounting portion 311. This can inhibit the sharp edge of the through hole 14 from coming in direct contact with the electric wire 312. This can inhibit the damage of the electric wire 312 from occurring even without mounting a protective member for protecting the electric wire 312 from the sharp edge to the electric wire 312, and can reduce the number of components. This can further reduce the manufacturing cost.

In the foregoing examples, the socket was described by taking, as an example, the one simultaneously holding both the edges of the cathode-ray tube, each having an opening. However, the ones each independently holding them are also acceptable. In that case, the through holes formed in the bottom surface portion 11 may be either the ones matched in size to the sockets, or the ones into which both the sockets can be inserted simultaneously. Whereas, for the shape of the socket, the one in a rectangular shape was exemplified. However, the invention is not limited thereto. The one in such a shape as to be capable of holding the edge of the cathode-ray tube having an opening with stability can be widely adopted. Further, also for the through holes formed in the bottom surface portion of the rear frame, the ones in the shape corresponding to the shape of the socket and the electric wire mounting portion formed on the socket can be widely adopted. However, in order to sufficiently ensure the strength of the rear frame, small through holes are preferred.

In the foregoing examples, a description was given by taking, as an example, the case using the cathode-ray tube 30 as the light source. However, the invention is not limited thereto. A light source capable of making enough light incident upon the liquid crystal cell 6 can be widely adopted. However, the one with a small heating value is preferable. Whereas, a description was given by taking, as an example, the one having the U-shaped cathode-ray tube 30 as the backlight 3 serving as a light source. However, the invention is not limited thereto. The one capable of making light incident upon the liquid crystal cell 6 sufficiently, and in such a manner as to prevent unevenness can be widely adopted. Further, as the liquid crystal display apparatus, a description was given by taking, as an example, the one having two backlights 3 serving as light sources. However, the invention is not limited thereto. The one having such a number of backlights 3 as to allow light to be incident upon the liquid crystal cell 6 sufficiently and in such a manner as to prevent unevenness can be widely adopted.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.
Up to this point, embodiments of the invention was specifically described. However, the invention is not limited to the embodiments, and various changes may be made within the scope not departing from the gist.

## Claims

1. A liquid crystal display apparatus, comprising:
a rear frame having a rectangular bottom surface portion; and
a backlight having a cathode-ray tube disposed above the rear frame, a lamp socket mounted to the edge of the cathode-ray tube, and enclosing the cathode-ray tube, and an electric wire mounted to the lamp socket, and for supplying an electric power to the cathode ray tube,
**characterized in that**
the bottom surface portion of the rear frame has a plurality of through holes,
the lamp socket has an electric wire mounting portion jutting downward, and for mounting the electric wire thereto, and
the lamp socket is mounted such that the electric wire mounting portion is inserted into the through hole, and such that at least the tip of the electric wire mounting portion protrudes outward from the bottom surface portion of the rear frame.

2. The liquid crystal display apparatus according to claim 1,
**characterized in that** the lamp socket and the electric wire mounting portion are integrally formed.

3. The liquid crystal display apparatus according to claim 1 or 2,
**characterized in that** the cathode-ray tube has a folded portion formed in a U shape.

4. The liquid crystal display apparatus according to at least one of the preceding claims,
**characterized in that** the lamp socket holds both the edges of the cathode-ray tube simultaneously, and encloses the cathode-ray tube.

5. The liquid crystal display apparatus according to at least one of the preceding claims,
**characterized in that** the though hole has such a shape as to allow the electric wire mounting portion of the lamp socket to penetrate therethrough.

6. A liquid crystal display apparatus, comprising:
a rear frame having a rectangular bottom surface portion;
a reflection sheet mounted to the rear frame;
a backlight having three cathode-ray tubes disposed above the reflection sheet, and having a U-folded shape, a lamp socket for holding both the edges of the cathode-ray tubes simultaneously, and enclosing the cathode-ray tubes, and an electric wire mounted to the lamp socket, and for supplying an electric power to the cathode-ray tubes;
a light frame having a holding portion for holding the backlight on the underside;
a diffusion plate disposed on the light frame;
two diffusion sheets disposed in stacked relation on the diffusion plate;
a frame-like cell guide disposed so as to press the outer peripheral portions of the diffusion plate and the diffusion sheets;
a liquid crystal cell disposed above the cell guide; and
a bezel having an opening formed at the center,
**characterized in that**
the bottom surface portion of the rear frame has three rectangular through holes,
the lamp socket includes an electric wire mounting portion for mounting the electric wire thereto integrally formed on the underside, and
the lamp socket is mounted such that the electric wire mounting portion is inserted into the through hole, and such that the tip of the electric wire mounting portion protrudes outward from the bottom surface portion of the rear frame.
